# EUROPEAN PATENT APPLICATION

(11) **EP 4 717 590 A1**
(43) Date of publication of application: **01.04.2026**
(21) Application number: 23218621.3
(22) Date of filing: 20.12.2023
(51) Int. Cl.: B64C 9/02, B64C 9/16, B64C 11/00, B64C 13/50, B64D 27/31, B64D 27/34, B64D 27/40, B64D 33/00

(54) **WING ASSEMBLY FOR AIRCRAFT WITH INTEGRATED COOLING FOR SERVO ACTUATOR CONTROL UNIT**

(71) Applicant: Lilium eAircraft GmbH, 82234 Wessling (DE)
(72) Inventor: FERREIRA, Pedro, 82234 Wessling (DE); CVACH, Petr, 82234 Wessling (DE); VERMEIREN, Sebastien, 82234 Wessling (DE)
(74) Representative: Ter Meer Steinmeister & Partner

(57) **Abstract**

This patent application introduces a wing assembly for aircraft, featuring an innovative approach to integrating a servo actuator control unit (SCU) (5) within the propulsion unit (2). The assembly includes a main section for attachment to the aircraft's fuselage and a pivotally connected flap section (1). The propulsion unit (2), integral to the flap section (1), is configured with inlet and exhaust areas (2a, 2b) to facilitate thrust production. The SCU (5) is uniquely integrated into a skin part (2c) of the propulsion unit (2), positioning it in the path of airflow generated during flight. This strategic placement enhances heat dissipation by utilizing the airflow, effectively reducing the need for additional cooling mechanisms and contributing to a lighter, less complex aircraft design. The direct exposure of the SCU (5) to airflow helps maintain it within safe operational temperature ranges, potentially increasing its reliability and service life. The configuration focuses on improving thermal management and aerodynamic efficiency, aligning with current trends in aerospace for more efficient, robust, and environmentally conscious aircraft wing assemblies.

## Description

### Technical Field

The present invention is related to aeronautical engineering, focusing on the structural integration and thermal management of control units within aircraft wing assemblies. It encompasses advancements in the arrangement of these units to optimize operational efficiency and thermal regulation.

### Background

In aeronautical engineering, effective thermal management within aircraft wing assemblies is paramount. The servo actuator control units (SCUs), essential for the control and movement of aircraft wings, typically generate substantial heat. The conventional placement of SCUs within the internal cavities of wings necessitates additional cooling mechanisms. These mechanisms increase the overall weight and introduce potential points of system failure, which can lead to increased maintenance demands and possible compromises in flight safety.

Furthermore, existing cooling solutions often impact the aircraft's aerodynamic efficiency, leading to performance losses and greater fuel usage. Thus, there is an ongoing need in the aerospace field for an innovative approach that adeptly manages the heat produced by SCUs, while also reducing the complexity and weight associated with traditional cooling methods.

Building on the foregoing, the object of the present invention is to introduce a wing assembly for an aircraft that not only preserves the functionality of the SCUs but also enhances the aircraft's aerodynamic performance and operational efficiency.

### Summary of Invention

The aforementioned object is achieved through a wing assembly for an aircraft having the features outlined in independent claim 1. Further advantageous developments of the present invention are detailed in dependent claims 2 to 9.

More particularly, a wing assembly for an aircraft according to the present invention comprises:
a. a main section configured to be fixedly mounted to a fuselage of the aircraft;
b. a flap section, comprising:
   b.1 a propulsion unit with a propulsion unit inlet area and a propulsion unit exhaust area included, which, in operation, is configured to generate an air flow from the propulsion unit inlet area to the propulsion unit exhaust area so as to produce thrust; and
   b.2 a body part, which is pivotably mounted to the wing section so as to be pivotable around a pivot axis over a range of angular orientations from a horizontal orientation, in which the body part is substantially aligned with the main to form an elongate and substantially continuous cross-section, to a vertical orientation, in which the flap section is angled downwards with respect to the main section;
c. a servo actuator for generating the pivoting movement around the pivot axis for the flap section; and
d. a servo actuator control unit for controlling the servo actuator, the servo actuator control unit being integrated into a skin part of the propulsion unit, over which, in operation, the air flow generated by the propulsion unit passes.

This wing assembly of the present invention provides several key benefits. By integrating the servo actuator control unit within the skin of the propulsion unit, it simplifies the aircraft's structural layout. This innovative approach eliminates the need for additional cooling systems, thereby reducing both the weight and complexity of the aircraft. This integration also allows for enhanced heat dissipation, as the SCU is directly exposed to the airflow during flight operations.

Such exposure significantly improves the thermal management of the SCU, thereby boosting its reliability and prolonging its operational life. This strategic arrangement not only reduces the frequency and costs associated with maintenance but also positively influences the aircraft's aerodynamics. The result is a more streamlined aircraft profile that can lead to enhanced performance and fuel efficiency.

Preferably, the servo actuator control unit comprises a housing and servo electronic components housed in the housing, wherein an upper part of the housing forms the skin part of the propulsion unit, such that the upper part of the housing is directly exposed to outside environment and air flow.

This preferred embodiment further enhances the invention's practicality and efficacy. The housing design, with its upper part integrated into the propulsion unit's skin, maximizes exposure to ambient airflow, significantly boosting the cooling efficiency. This unique housing arrangement not only ensures optimal thermal regulation of the SCU's electronic components but also contributes to the overall aerodynamic profile of the aircraft. Such integration presents a seamless and streamlined solution, minimizing aerodynamic drag and further improving fuel efficiency. Additionally, by housing the electronic components in a manner that leverages external environmental conditions, the reliability and longevity of the SCU are further increased, reducing the need for frequent maintenance and potential system failures.

Further preferably, the servo actuator is installed in an internal cavity of the body part and is arranged at least partially in front of the propulsion unit in a direction of forward flight.

This arrangement offers several advantages. Firstly, it contributes to the aerodynamic efficiency of the aircraft by maintaining a streamlined external profile, as the servo actuator is neatly housed within the wing structure. This positioning minimizes potential airflow disruption, which can enhance the overall flight performance and reduce drag. Secondly, placing the servo actuator in front of the propulsion unit optimizes the utilization of space within the wing assembly, allowing for a more compact and efficient design. This can contribute to a reduction in the wing's weight, further improving the aircraft's fuel efficiency. Additionally, this placement can facilitate easier access for maintenance and inspection, potentially simplifying the maintenance process and reducing downtime.

Still further preferably, the servo actuator control unit is spaced apart from the servo actuator and is electrically connected to the servo actuator by at least one electrical cable.

The spatial separation between the SCU and the servo actuator allows for greater flexibility in the design and arrangement of these components within the aircraft's wing assembly. This flexibility can lead to optimized use of available space and potentially better weight distribution within the wing. Furthermore, the incorporation of electrical cabling for connectivity offers a dependable and efficient communication channel between the control unit and the actuator, ensuring precise and responsive control over the wing assembly's movements. Furthermore, this setup can facilitate easier access and maintenance of the SCU and the servo actuator, since they can be individually accessed without the need to dismantle the entire integrated system, thereby reducing maintenance time and costs.

According to a preferred aspect of the present invention, the propulsion unit is configured as an electric ducted fan engine having a cowling, which encloses a fan and an electric motor driving into rotation the fan, and wherein the body part forms the lower section of said cowling.

This aspect of the present invention offers significant advantages. The electric ducted fan engine configuration allows for efficient and controlled propulsion, contributing to the aircraft's overall performance and maneuverability. The integration of the body part as part of the cowling streamlines the overall assembly, reducing aerodynamic drag and enhancing the aircraft's fuel efficiency. The cowling also serves to protect the internal components while aiding in airflow management around the propulsion unit, further improving the engine's efficiency and reducing noise. Additionally, the use of an electric motor for driving the fan aligns with advancements in electric propulsion technology, offering a greener and quieter alternative to traditional propulsion systems.

According to a further preferred aspect of the present invention, the servo actuator control unit is integrated into a skin part of the body part forming the lower section of the cowling.

This integration optimizes space usage within the wing assembly, enhancing compactness and aerodynamics. It also provides protection for the SCU against environmental and mechanical stress, thereby improving durability and reducing damage risk. The SCU's integration into the lower section of the cowling guarantees exposure to direct airflow, enhancing heat dissipation efficiency and achieving optimal thermal regulation. This strategic positioning aids in reducing aerodynamic resistance and drag, resulting in improved fuel efficiency and performance, in line with contemporary aircraft design goals.

As a yet further preferred aspect of the present invention, the servo actuator control unit is arranged in front of the fan in a direction of forward flight, so that an inlet air flow generated by the propulsion unit passes over the skin part, into which the servo actuator control unit is integrated.

This positioning allows the SCU to benefit from the increased airflow during flight, significantly enhancing its cooling efficiency. The direct exposure to the inlet airflow, which is at a higher velocity, provides more effective cooling than static or slower-moving air, ensuring the SCU operates within optimal temperature ranges. This setup also contributes to a more streamlined internal configuration, as it aligns the SCU with the natural airflow direction, reducing potential turbulence and drag. Such strategic placement improves the overall aerodynamic efficiency of the aircraft, potentially leading to better fuel economy and reduced operational costs. Additionally, this placement in the airflow path ensures consistent cooling across various flight conditions, enhancing the SCU's reliability and performance.

In a still further preferred aspect of the present invention, the servo actuator control unit is arranged behind the air inlet of the propulsion unit in a direction of forward flight so that the skin part, into which the servo actuator control unit is integrated, faces an interior space of the cowling, through which the air flow generated by the propulsion unit passes.

By positioning the SCU behind the air inlet, it benefits from a consistent and directed airflow, which enhances its cooling efficiency. This location also protects the SCU from direct environmental exposure, potentially increasing its durability and reducing the risk of damage from external factors. Additionally, this strategic placement within the cowling's interior space contributes to maintaining the aerodynamic integrity of the aircraft's exterior, ensuring that the airflow is smoothly managed around the propulsion unit for improved performance and efficiency. This configuration also aligns with the aim to minimize the overall weight and complexity of the aircraft's wing assembly, further contributing to its operational efficiency.

### Brief Description of Drawings

The invention will be better understood and objects other than those set forth above will become apparent when consideration is given to the following detailed description thereof. Such description makes reference to the annexed drawings wherein:
Fig. 1 shows a perspective and partial sectional view of a flap section, depicted with a transparent outer fairing, configured for pivotal attachment to a main section to form a wing assembly according to the present invention.
Fig. 2 is an exploded view of the flap section shown in Fig. 1, highlighting a propulsion unit for thrust generation and a servo actuator, as well as a servo actuator control unit for flap angle adjustment.
Fig. 3 displays an enlarged detail of the flap section of Fig. 1 near the propulsion unit inlet area, illustrating the servo actuator installed in a lower section of a cowling and the servo actuator control unit positioned to face an interior space for enhanced cooling by an airflow generated by the propulsion unit.

### Detailed Description of Drawings

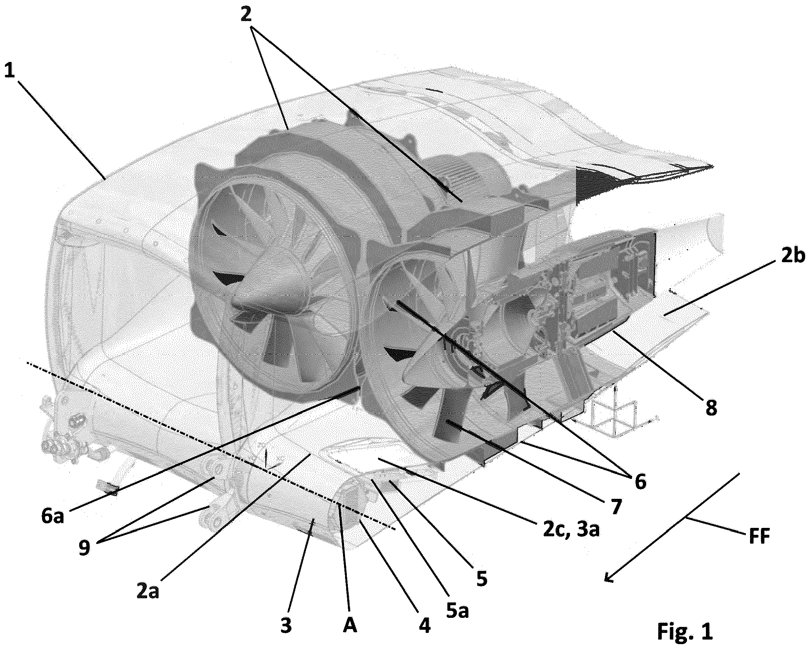

In the detailed description of the drawings, Figs. 1 to 3 showcase a flap section 1 configured for pivotal connection to a main section (not depicted) of an aircraft wing, which is attached to the aircraft's fuselage. The illustrated flap section 1, which is pivotally connected to the main section to form the wing assembly according to the present invention, integrates key features such as a propulsion unit 2 and a servo actuator control unit 5, which significantly enhance the functional and aerodynamic capabilities of the wing assembly.

Fig. 1 presents a transparent sectional depiction of the flap section 1 within an aircraft wing assembly according to the present invention, engineered for integrated cooling of servo actuator control units (SCUs) 5 via strategic airflow management. This perspective withdraws the outer fairing to expose the inner configuration, highlighting the inventive incorporation of the SCU's 5 cooling function into the wing assembly.

Included in flap section 1 is a propulsion unit 2, characterized by a propulsion unit inlet area 2a and a propulsion unit exhaust area 2b, both instrumental in generating thrust. Body part 3 of flap section 1 is pivotably connected to a main section (not depicted in the drawings) via mounting brackets 9, and is capable of pivoting about a pivot axis A which extends transversely with respect to the aircraft's fuselage. In cruise flight, body part 3 is horizontally oriented as depicted in Fig. 1, to align with the main section and form a continuous, elongated cross-section. For hover flight during takeoff and landing, flap section 1 is capable of pivoting about pivot axis A from the horizontal to a downward-angled vertical orientation relative to the main section.

A servo actuator 4 is integrated within an internal cavity of body part 3 and is positioned at least partially in front of propulsion unit 2 in a forward flight FF direction. The SCU 5 is seamlessly integrated into a skin part 2c of propulsion unit 2 and is thus directly exposed to the airflow during flight operations, benefiting from improved cooling efficiency. This direct exposure negates the necessity for supplementary cooling systems, leading to reductions in weight and system intricacy.

Fig. 1 clearly illustrates the integration of SCU 5 into a skin part 2c of propulsion unit 2, emphasizing its direct contact with airflow for optimized cooling. The proximity of SCU 5 to servo actuator 4, yet spatially separated and interconnected through electrical cabling, underscores a configuration that ensures both system compactness and streamlined simplicity.

Moreover, the transparent perspective view presented in Fig. 1 illustrates propulsion unit 2, characterized as an electric ducted fan engine, equipped with elements including cowling 6, fan 7, and electric motor 8. It is discernible that body part 3 constitutes the lower section of cowling 6, embedding SCU 5 within its skin part 3a.

In addition, the strategic location of the SCU 5 is deliberately chosen to take advantage of the inlet airflow fore of (in front of) the fan 7, while at the same time being positioned aft of (behind) the propulsion unit inlet area 2a and, thus, facing an interior space 6a of the cowling 6. This strategic location ensures that SCU 5 is cooled efficiently by the airflow passing through the propulsion unit 2, highlighting a thoughtful placement for optimized cooling and minimized aerodynamic resistance.

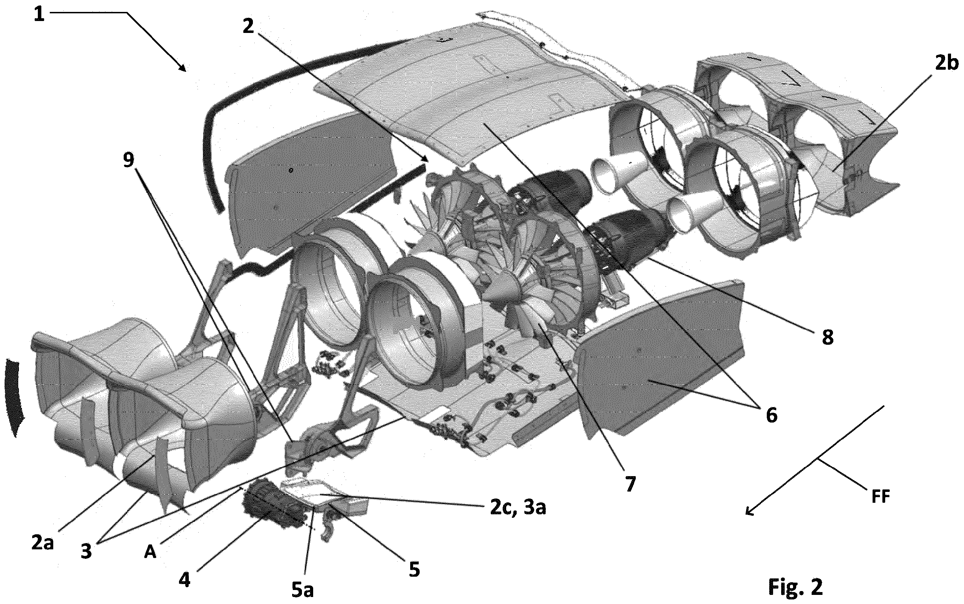

Fig. 2 illustrates an exploded perspective of the wing assembly's flap section 1, detailing the integration and thermal regulation of SCUs 5. It elaborates on the wing's structural and functional elements, underscoring the component interplay essential for operational efficiency.

Integral components of flap section 1 encompass: propulsion unit 2, adeptly engineered to channel airflow from the propulsion unit inlet area 2a to the propulsion unit exhaust area 2b, generating crucial thrust; body part 3, pivotally affixed to the unshown main section of the wing, which enables the entire flap section 1, inclusive of the propulsion unit 2, to pivot about pivot axis A across a spectrum of angular positions from a horizontal orientation for cruising to a vertical orientation for hovering; servo actuator 4, entrusted with producing the pivotal motion around pivot axis A for flap section 1; and servo actuator control unit 5, tasked with the regulation of servo actuator 4, thereby dictating the dynamic positioning of the wing assembly.

Incorporating the propulsion unit 2 as an electric ducted fan engine, this component orchestrates a thrust-generating airflow from inlet area 2a to exhaust area 2b, epitomizing the wing assembly's thrust-generating capability. This configuration aligns seamlessly with the principles of sustainable aviation, underscoring the innovative thrust mechanism integral to the wing assembly's functionality.

The body part 3 constitutes the lower segment of cowling 6, integral to the electric ducted fan engine, contributing to aerodynamic efficiency and enabling pivotal motion. This adaptability of the body part 3 is essential for optimizing performance during different phases of flight, significantly influencing the aircraft's overall maneuverability and efficiency.

Within a cavity of body part 3, servo actuator 4 is strategically situated towards the fore, optimizing spatial use and contributing to the aerodynamic silhouette of the flap section 1. This actuator's 4 placement facilitates crucial pivoting around axis A, enabling nuanced wing adjustments for varied flight dynamics.

In alignment with the inventive essence, SCU 5 is embedded within a skin part 2c of the propulsion unit 2. This strategic integration exploits the airflow across the SCU 5 for passive cooling, eliminating the need for supplementary cooling mechanisms. This not only streamlines the wing's structure but also enhances its reliability and operational efficiency.

Within propulsion unit 2, electric motor 8 energizes fan 7, exemplifying technological advancement. This electric motor 8 is instrumental for diminishing operational noise and enhancing environmental sustainability, crucial for the modern aircraft's performance.

In the preferred embodiment depicted in Figs. 1 to 3, the SCU 5 encompasses a housing 5a, which shelters the servo electronic components. This housing 5a is integrated into the skin of the cowling 6 of the propulsion unit 2, ensuring it is strategically positioned to capitalize on the airflow, thereby facilitating superior cooling for the servo electronic components and enhancing the system's thermal efficiency.

The cowling 6 enclosed the fan 7 and motor 8 within the propulsion unit 2 and plays a key role in directing airflow and shielding vital components, thereby integrating utility with a refined configuration.

Fig. 2 also details mounting brackets 9, essential for the pivotal attachment of the flap section 1 to the main section (not depicted) of the wing assembly. These components, along with other structural elements, underscore a focus on streamlined assembly, ease of maintenance, and robustness - vital for the enduring performance of the wing assembly.

Fig. 2 highlights the ingenuity behind the integration of SCU 5, showcasing its strategic incorporation into a skin part 2c of the propulsion unit 2. This exposes SCU 5 to the airflow during flight, enhancing thermal regulation and contributing to the wing assembly's operational efficiency. The visualization captures the progress in aircraft wing assembly technology, spotlighting the SCU's 5 position within the propulsion unit 2 as a pivotal advancement.

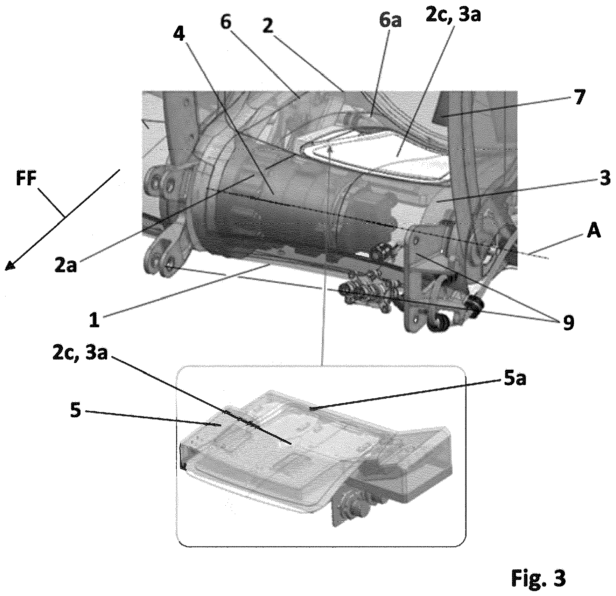

Fig. 3 provides an intricate depiction of a fore portion of the aircraft's flap section 1, emphasizing the precise integration of the servo actuator control unit (SCU) 5 into the skin part 2c of the propulsion unit 2. Strategically positioned to harness the oncoming airflow in the direction of forward flight FF, the housing 5a of the SCU 5 is embedded within the structure of the propulsion unit 2, attaining direct exposure to ambient airflows and the air intake of the propulsion unit 2, thus optimizing cooling.

This innovative configuration harnesses the dynamic air currents, especially from the propulsion unit inlet area 2a, to effectively manage the operational heat of the SCU 5. Such exposure facilitates the dissipation of heat, obviating the necessity for ancillary cooling mechanisms and contributing to the assembly's streamlined architecture. It embodies an advancement in thermal regulation within aircraft design, boosting the SCU's 5 endurance and efficacy while minimizing the need for additional weight and system complexity.

In the depicted setup, the SCU 5 is ideally situated to address the thermal demands of the servo electronic component. The previous arrangement, confining the SCU entirely within the cavity of the propulsion unit, resulted in heat build-up that challenged thermal harmony and dependability. This inventive relocation of the SCU 5 to an exterior skin part 2c of the propulsion unit 2 effectively negates the requirement for ancillary cooling mechanisms, streamlining the structure, diminishing weight, and eradicating possible sources of malfunction.

In the embodiment depicted across Figs. 1 to 3, the SCU 5 is strategically positioned fore of the fan 7, that is, ahead of the fan 7, in the direction of forward flight FF. This location optimizes the cooling effect by leveraging the airflow entering the propulsion unit 2. Concurrently, the SCU 5 is situated aft of the propulsion unit inlet area 2a, meaning it is situated rearward of the propulsion unit inlet area 2a, in the direction of forward flight FF. This arrangement positions the SCU 5 to directly face the interior space 6a of the cowling 6, thereby enabling effective thermal management by utilizing the internal airflow dynamics. Hence, this deliberate positioning ensures effective thermal management and shields the SCU 5 from environmental exposure, thereby extending its durability and functional integrity.

Moreover, the SCU 5 maintains an electrical linkage to the servo actuator 4 through at least one electrical cable, a detail not depicted in Fig. 3, yet essential for commanding the flap section's 1 pivotal movements. This spatial arrangement affords increased adaptability in the wing's construction and simplifies upkeep, permitting discrete access to each component for serviceability.

Fig. 3 captures the technical ingenuity and practical merit of the present invention, showcasing the elimination of supplementary cooling systems, which markedly enhances the wing assembly's economic viability and functional effectiveness. The inventive placement of the SCU's 5 housing 5a for environmental exposure represents a significant advancement in SCU integration, guaranteeing system operation within safe thermal thresholds across various flight scenarios.

In conclusion, the disclosed invention elevates aircraft wing assembly technology by cohesively incorporating the servo actuator control unit (SCU) 5 within the framework of the propulsion unit 2, thereby enhancing thermal management alongside aerodynamic efficiency. By departing from conventional SCU 5 installation practices, the SCU 6 is strategically exposed to the airstream, which eliminates the requirement for supplemental cooling devices, consequently reducing both weight and system intricacy. The SCU's 5 exposure to direct airflow guarantees maintenance of operational temperatures within ideal limits, thus bolstering both reliability and longevity. The configuration of the present invention streamlines the assembly process, optimizes the use of space, and simplifies the maintenance protocol. Addressing the pressing need for an assembly that is both efficient and sustainable, the present invention is a testament to the progressive vision of aeronautical engineering, showcasing a configuration that not only enhances performance but also champions environmental responsibility and operational effectiveness.

## Claims

1. Wing assembly for an aircraft, comprising:
a. a main section configured to be fixedly mounted to a fuselage of the aircraft;
b. a flap section (1), comprising:
b.1 a propulsion unit (2) with a propulsion unit inlet area (2a) and a propulsion unit exhaust area (2b) included, which, in operation, is configured to generate an air flow from the propulsion unit inlet area (2a) to the propulsion unit exhaust area (2b) so as to produce thrust; and
b.2 a body part (3), which is pivotably mounted to the wing section so as to be pivotable around a pivot axis (A) over a range of angular orientations from a horizontal orientation, in which the body part (3) is substantially aligned with the main section to form an elongate and substantially continuous cross-section, to a vertical orientation, in which the flap section (1) is angled downwards with respect to the main section;
c. a servo actuator (4) for generating the pivoting movement around the pivot axis (A) for the flap section (1); and
d. a servo actuator control unit (5) for controlling the servo actuator (4),
**characterized in that**
the servo actuator control unit (5) is integrated into a skin part (2c) of the propulsion unit (2), over which, in operation, the air flow generated by the propulsion unit (2) passes.

2. Wing assembly according to claim 1, wherein the servo actuator control unit (5) comprises a housing (5a) and servo electronic components housed in the housing (5a), and wherein an upper part of the housing (5a) forms the skin part (2c) of the propulsion unit (2), such that the upper part of the housing (5a) is directly exposed to outside environment and air flow.

3. Wing assembly according to claim 1 or 2, wherein the servo actuator (4) is installed in an internal cavity of the body part (3) and is arranged at least partially in front of the propulsion unit (2) in a direction of forward flight (FF).

4. Wing assembly according to any one of claims 1 to 3, wherein the servo actuator control unit (5) is spaced apart from the servo actuator (4) and is electrically connected to the servo actuator (4) by at least one electrical cable.

5. Wing assembly according to any one of claims 1 to 4, wherein the propulsion unit (2) is configured as an electric ducted fan engine having a cowling (6), which encloses a fan (7) and an electric motor (8) driving into rotation the fan (7), and wherein the body part (3) forms the lower section of said cowling (6).

6. Wing assembly according to claim 5, wherein the servo actuator control unit (5) is integrated into a skin part (3a) of the body part (3) forming the lower section of the cowling (6).

7. Wing assembly according to claim 5 or 6, wherein the servo actuator control unit (5) is arranged in front of the fan (7) in a direction of forward flight (FF), so that an inlet air flow generated by the propulsion unit (2) passes over the skin part (2c), into which the servo actuator control unit (5) is integrated.

8. Wing assembly according to any one of claims 5 to 7, wherein the servo actuator control unit (5) is arranged behind the propulsion unit inlet area (2a) in a direction of forward flight (FF) so that the skin part (2c), into which the servo actuator control unit (5) is integrated, faces an interior space (6a) of the cowling (6), through which the air flow generated by the propulsion unit (2) passes.

9. Aircraft, comprising:
a. a fuselage;
b. at least one pair of wing assemblies according to any one of the preceding claims; and
c. a flight control unit for controlling the angular orientations of the flap sections (1) and the thrust outputs of the propulsion units (2).

## Amended claims

### Amended claims in accordance with Rule 137(2) EPC.

1. Wing assembly for an aircraft, comprising:
a. a main section configured to be fixedly mounted to a fuselage of the aircraft;
b. a flap section (1), comprising:
b.1 a propulsion unit (2) with a propulsion unit inlet area (2a) and a propulsion unit exhaust area (2b) included, which, in operation, is configured to generate an air flow from the propulsion unit inlet area (2a) to the propulsion unit exhaust area (2b) so as to produce thrust; and
b.2 a body part (3), which is pivotably mounted to the wing section so as to be pivotable around a pivot axis (A) over a range of angular orientations from a horizontal orientation, in which the body part (3) is substantially aligned with the main section to form an elongate and substantially continuous cross-section, to a vertical orientation, in which the flap section (1) is angled downwards with respect to the main section;
c. a servo actuator (4) for generating the pivoting movement around the pivot axis (A) for the flap section (1); and
d. a servo actuator control unit (5) for controlling the servo actuator (4), wherein the servo actuator control unit (5) is integrated into a skin part (2c) of the propulsion unit (2), over which, in operation, the air flow generated by the propulsion unit (2) passes,
**characterized in that**
the servo actuator control unit (5) comprises a housing (5a) and servo electronic components housed in the housing (5a), wherein an upper part of the housing (5a) forms the skin part (2c) of the propulsion unit (2), such that the upper part of the housing (5a) is directly exposed to outside environment and air flow.

2. Wing assembly according to claim 1, wherein the servo actuator (4) is installed in an internal cavity of the body part (3) and is arranged at least partially in front of the propulsion unit (2) in a direction of forward flight (FF).

3. Wing assembly according to claim 1 or 2, wherein the servo actuator control unit (5) is spaced apart from the servo actuator (4) and is electrically connected to the servo actuator (4) by at least one electrical cable.

4. Wing assembly according to any one of claims 1 to 3, wherein the propulsion unit (2) is configured as an electric ducted fan engine having a cowling (6), which encloses a fan (7) and an electric motor (8) driving into rotation the fan (7), and wherein the body part (3) forms the lower section of said cowling (6).

5. Wing assembly according to claim 4, wherein the servo actuator control unit (5) is integrated into a skin part (3a) of the body part (3) forming the lower section of the cowling (6).

6. Wing assembly according to claim 4 or 5, wherein the servo actuator control unit (5) is arranged in front of the fan (7) in a direction of forward flight (FF), so that an inlet air flow generated by the propulsion unit (2) passes over the skin part (2c), into which the servo actuator control unit (5) is integrated.

7. Wing assembly according to any one of claims 4 to 6, wherein the servo actuator control unit (5) is arranged behind the propulsion unit inlet area (2a) in a direction of forward flight (FF) so that the skin part (2c), into which the servo actuator control unit (5) is integrated, faces an interior space (6a) of the cowling (6), through which the air flow generated by the propulsion unit (2) passes.

8. Aircraft, comprising:
a. a fuselage;
b. at least one pair of wing assemblies according to any one of the preceding claims; and
c. a flight control unit for controlling the angular orientations of the flap sections (1) and the thrust outputs of the propulsion units (2).
